# EUROPÄISCHE PATENTSCHRIFT

(11) **EP 3 622 198 B1**
(45) Veröffentlichungstag und Bekanntmachung des Hinweises auf die Patenterteilung: **07.04.2021**
(21) Anmeldenummer: 18726355.3
(22) Anmeldetag: 09.05.2018
(51) Int. Cl.: F16H 1/16, F16H 1/20, F16H 1/22, F16H 57/033, F16H 57/039

(54) **BAUKASTENSYSTEM ZUM HERSTELLEN EINER STELLEINRICHTUNG**
MODULAR SYSTEM FOR PRODUCING A CONTROL DEVICE
SYSTÈME MODULAIRE POUR LA RÉALISATION D'UN DISPOSITIF D'ACTIONNEMENT

(30) Priorität: 10.05.2017 DE 102017207931
(43) Veröffentlichungstag der Anmeldung: 18.03.2020
(73) Patentinhaber: Mahle International GmbH, 70376 Stuttgart (DE)
(72) Erfinder: MAKAROW, Eugen, 71636 Ludwigsburg (DE); MOCZKO, David, 70569 Stuttgart (DE); SALFELD, Edgar, 73669 Lichtenwald (DE); WETZEL, Florian, 73666 Baltmannsweiler (DE)
(74) Vertreter: BRP Renaud & Partner mbB Rechtsanwälte Patentanwälte Steuerberater
(86) Internationale Anmeldenummer: PCT/EP2018/061984
(87) Internationale Veröffentlichungsnummer: WO 2018/206632

(56) Entgegenhaltungen:
- EP-A2- 1 279 861
- DE-A1- 19 647 139
- DE-A1-102015 222 698
- DE-A1-102016 116 679

## Beschreibung

Die vorliegende Erfindung betrifft eine Stelleinrichtung zum mechanischen Betätigen eines Bauteils mit den Merkmalen des Oberbegriffs des Anspruchs 1. Die Erfindung betrifft außerdem ein Baukastensystem zum Herstellen einer derartigen Stelleinrichtung.

Aus der DE 10 2013 110 349 A1 ist eine Stelleinrichtung bekannt, die einen Elektromotor umfasst, der einen Stator und einen Rotor mit Antriebswelle aufweist. Ferner weist die Stelleinrichtung eine Abtriebswelle zum drehenden Antreiben eines Stellglieds auf. Über dieses Stellglied kann dann zweckmäßig die Kopplung der Stelleinrichtung mit dem jeweils zu betätigenden Bauteil erfolgen. Ferner umfasst die Stelleinrichtung ein Getriebe, das die Antriebswelle mit der Abtriebswelle antriebsmäßig verbindet und das einen Schneckentrieb mit Schnecke und Schneckenrad aufweist. Für einen kompakten Aufbau der Stelleinrichtung verläuft eine Antriebsachse, um welche die Antriebswelle drehbar ist, senkrecht zu einer Abtriebsachse, um welche die Abtriebswelle drehbar ist. Bei der bekannten Stelleinrichtung ist an der Antriebswelle des Elektromotors ein erstes Zahnrad drehfest angeordnet, das mit einem zweiten Zahnrad kämmt, das drehfest mit der Schnecke verbunden ist. Ferner ist das Schneckenrad mit der Abtriebswelle drehfest verbunden.

Eine gattungsgemäße Stelleinrichtung ist aus der DE 196 47 139 A1 bekannt und unterscheidet sich von der vorstehend beschriebenen Stelleinrichtung dadurch, dass die Schnecke drehfest bezüglich der Antriebswelle angeordnet ist, und dass das Schneckenrad und ein erstes Zahnrad durch ein erstes Übersetzungszahnrad gebildet sind, an dem zwei Zahnradabschnitte drehfest zueinander miteinander verbunden sind, die verschiedene Durchmesser aufweisen und die das Schneckenrad und das erste Zahnrad bilden.

Stelleinrichtungen dieser Art, die auch als Aktuatoren bezeichnet werden können, lassen sich vor allem bei Kraftfahrzeugen vielseitig verwenden, beispielsweise um Regelorgane zu betätigen, also zu verstellen. Beispielsweise lassen sich mit einer solchen Stelleinrichtung Klappen in einer Frischluftanlage oder in einer Abgasanlage sowie Ventile, wie zum Beispiel ein Drosselventil oder ein Wastegate-Ventil oder eine variable Turbinengeometrie betätigen. Von besonderer Bedeutung sind dabei elektrische Thermostate, Abgasklappen, Akustikklappen und Bypassklappen.

Für unterschiedliche Anwendungsfälle werden dabei unterschiedliche Stellkräfte bzw. Drehmomente und unterschiedliche Stellgeschwindigkeiten benötigt, so dass für unterschiedliche Anwendungen eine entsprechende Anzahl an verschiedenen Varianten der Stelleinrichtung bereitgestellt werden muss.

Die vorliegende Erfindung beschäftigt sich mit dem Problem, für eine Stelleinrichtung der vorstehend beschriebenen Art einen Weg aufzuzeigen, der eine kostengünstige Variantenbildung ermöglicht.

Dieses Problem wird erfindungsgemäß durch die Gegenstände der unabhängigen Ansprüche 1,14 gelöst. Vorteilhafte Ausführungsformen sind Gegenstand der abhängigen Ansprüche.

Die Erfindung beruht auf dem allgemeinen Gedanken, Varianten der Stelleinrichtung dadurch zu bilden, dass verschiedene Getriebe zum Einsatz kommen, während die Stelleinrichtung im Übrigen baugleich bleiben kann. Insbesondere kann bei verschiedenen Stelleinrichtungen der gleiche Elektromotor zum Einsatz kommen. Von besonderer Bedeutung ist dabei außerdem, dass die Positionen von Antriebswelle und Abtriebswelle bei verschiedenen Stelleinrichtungen gleich bleiben. Folglich kann auch ein Gehäuse der Stelleinrichtung bei verschiedenen Varianten gleich bleiben. Lediglich das Getriebe, das die Antriebswelle mit der Abtriebswelle antriebsmäßig verbindet, variiert bei den verschiedenen Varianten der Stelleinrichtung. Im Speziellen beruht die Erfindung auf dem Gedanken, das Getriebe so zu konzipieren, dass es zumindest zwischen zwei verschiedenen Konfigurationen umbaubar ist. Im Einzelnen werden zumindest eine einstufige erste Konfiguration und eine zweistufige zweite Konfiguration vorgesehen, zwischen denen das Getriebe umgebaut werden kann, ohne dass dabei die Relativlage zwischen Antriebswelle und Abtriebswelle verändert werden muss.

Bei der erfindungsgemäßen Stelleinrichtung ist die Schnecke drehfest zu bzw. an der Antriebswelle angeordnet, so dass die Position der Schnecke bei allen Getriebevarianten bzw. bei allen Konfigurationen gleich ist. Hierzu kann die Schnecke zweckmäßig unmittelbar an der Antriebswelle fest angebracht sein. Ebenso kann die Schnecke z.B. über eine Klauenkupplung oder eine andere Formschlussverbindung drehfest mit der Antriebswelle verbunden sein. Ferner wird vorgeschlagen, dass das Schneckenrad und ein erstes Zahnrad durch ein erstes Übersetzungszahnrad gebildet sind, an dem zwei Zahnradabschnitte integral ausgeformt sind, die verschiedene Durchmesser und/oder verschiedene Zähnezahlen aufweisen, wobei diese beiden Zahnradabschnitte des ersten Übersetzungszahnrads das Schneckenrad und erste Zahnrad bilden.

Wie bereits vorstehend erläutert, ist das Getriebe erfindungsgemäß zumindest zwischen einer einstufigen ersten Konfiguration und einer zweistufigen zweiten Konfiguration umgebaut. In der ersten Konfiguration ist das vorstehend genannte erste Übersetzungszahnrad drehfest auf der Abtriebswelle angeordnet, so dass die Schnecke mit dem Schneckenrad in Eingriff steht und das erste Zahnrad freisteht. Mit anderen Worten, in dieser ersten Konfiguration wird das erste Zahnrad gar nicht benötigt. In der zweiten Konfiguration ist das erste Übersetzungszahnrad drehbar auf einer Zwischenwelle angeordnet, die sich parallel zur Abtriebswelle erstreckt, so dass die Schnecke mit dem Schneckenrad in Eingriff steht, während das erste Zahnrad mit einem Abtriebszahnrad in Eingriff steht, das drehfest auf der Abtriebswelle angeordnet ist. Mit anderen Worten, in der zweiten Konfiguration werden beide Zahnradabschnitte des ersten Übersetzungszahnrads verwendet, um die zweistufige Getriebeübersetzung zu realisieren. Bemerkenswert ist, dass bei beiden Konfigurationen das gleiche erste Übersetzungszahnrad zum Einsatz kommt. Bekanntermaßen erhöhen Gleichteile die Stückzahl und senken dadurch die Herstellungskosten.

Besonders vorteilhaft ist somit eine Ausführungsform, bei welcher die Antriebswelle und die Abtriebswelle in der ersten Konfiguration und in der zweiten Konfiguration dieselbe Relativlage zueinander aufweisen, so dass sich das Getriebe besonders einfach zwischen den beiden Konfigurationen umbauen lässt.

Bei einer vorteilhaften Ausführungsform kann das Getriebe außerdem zwischen der einstufigen ersten Konfiguration, der zweistufigen zweiten Konfiguration und einer dreistufigen dritten Konfiguration umgebaut werden. In der dritten Konfiguration ist das erste Übersetzungszahnrad wieder auf der Abtriebswelle angeordnet; in diesem Fall jedoch bezüglich der Abtriebswelle drehbar. Ferner ist ein zweites Übersetzungszahnrad drehbar auf der vorgenannten Zwischenwelle angeordnet. An diesem zweiten Übersetzungszahnrad sind zwei Zahnradabschnitte integral ausgeformt, die verschiedene Durchmesser und/oder verschiedene Zähnezahlen aufweisen. Die beiden Zahnradabschnitte des zweiten Übersetzungszahnrads bilden ein zweites Zahnrad und ein drittes Zahnrad. In der dritten Konfiguration steht das erste Zahnrad mit dem zweiten Zahnrad in Eingriff, während das dritte Zahnrad mit dem Abtriebszahnrad in Eingriff steht. In der dritten Konfiguration ist das Abtriebszahnrad wiederum drehfest auf der Abtriebswelle angeordnet. Auf diese Weise kann in der dritten Konfiguration ebenfalls das erste Übersetzungszahnrad genutzt werden, das auch in der ersten Konfiguration und in der zweiten Konfiguration verwendet wird. Darüber hinaus wird in der dritten Konfiguration auch das Abtriebszahnrad verwendet, das schon in der zweiten Konfiguration zum Einsatz kommt. Somit wird auch hier die Anzahl der Gleichteile erhöht, was letztlich die Herstellungskosten senkt.

Besonders vorteilhaft ist somit auch hier eine Ausführungsform, bei welcher die Antriebswelle und die Abtriebswelle in der ersten Konfiguration, in der zweiten Konfiguration und in der dritten Konfiguration dieselbe Relativlage zueinander aufweisen. Außerdem ist von Vorteil, wenn die in der zweiten und dritten Konfiguration benötigte Zwischenwelle in der zweiten und dritten Konfiguration vorzugsweise dieselbe Relativlage zur Antriebswelle und zur Abtriebswelle aufweist, so dass diese Zwischenwelle in der zweiten und dritten Konfiguration identisch angeordnet und gelagert werden kann. Ferner ist es möglich, diese Zwischenwelle auch in der ersten Konfiguration vorzusehen, auch wenn sie dort nicht benötigt wird. Ebenso ist es möglich, das Abtriebszahnrad auch in der ersten Konfiguration an der Abtriebswelle anzubringen, auch wenn es in der ersten Konfiguration nicht benötigt wird. Die Anordnung der Zwischenwelle und/oder des Abtriebszahnrads erfolgt in der zweiten und dritten Konfiguration derart, dass sich dadurch auch in der ersten Konfiguration kein störendes Hindernis ergibt.

Zweckmäßig können das erste Zahnrad und das dritte Zahnrad gleiche Moduln aufweisen und insbesondere zumindest hinsichtlich der Zähnezahl, vorzugsweise hinsichtlich Durchmesser und Zähnezahl, identisch sein. Dies hat zur Folge, dass in der zweiten und dritten Konfiguration die Relativlage von Abtriebswelle und Zwischenwelle identisch gewählt werden kann, um den gewünschten Eingriff des Abtriebszahnrads mit dem ersten Zahnrad in der zweiten Konfiguration bzw. mit dem dritten Zahnrad in der dritten Konfiguration zu ermöglichen. Der Modul m ist definiert als der Quozient aus der Zahnradteilung p und der Kreiszahl π: m = p / π. Gleichbedeutend aber anschaulicher ist der Modul m auch als der Quozient aus dem Teilkreisdurchmesser d und der Zähnezahl z definiert: m = d / z.

Eine andere Ausführungsform schlägt vor, dass das zweite Zahnrad und das Abtriebszahnrad gleiche Moduln aufweisen und insbesondere zumindest hinsichtlich der Zähnezahl, vorzugsweise hinsichtlich Durchmesser und Zähnezahl, identisch sind. Auch diese Maßnahme unterstützt eine identische Relativlage zwischen Abtriebswelle und Zwischenwelle in der zweiten und dritten Konfiguration. Besonders vorteilhaft ist die Kombination der beiden letztgenannten Ausführungsformen.

Von besonderem Vorteil ist eine Ausführungsform, bei der das erste Zahnrad, das zweite Zahnrad, das dritte Zahnrad und das Abtriebszahnrad gleiche Moduln aufweisen. Hierdurch vereinfacht sich die Umbaubarkeit des Getriebes in die verschiedenen Konfigurationen.

Eine andere Ausführungsform schlägt vor, dass in der dritten Konfiguration die Schnecke geometrisch zwischen dem Abtriebszahnrad und dem zweiten Zahnrad angeordnet ist. Hierdurch ergibt sich eine besonders kompakte Anordnung.

Bevorzugt ist eine Ausführungsform, bei welcher in der dritten Konfiguration die Schnecke parallel zur Abtriebsachse gesehen geometrisch zwischen dem zweiten Zahnrad und dem Abtriebszahnrad angeordnet ist und quer zur Abtriebsachse gesehen geometrisch zwischen der Abtriebswelle und der Zwischenwelle angeordnet ist. Hierdurch ergibt sich eine besonders kompakte Bauform.

Bevorzugt ist eine Ausführungsform, bei der das erste Übersetzungszahnrad für die erste Konfiguration drehfest und für die dritte Konfiguration drehbar an der Abtriebswelle angebracht werden kann, so dass unter Verwendung desselben ersten Übersetzungszahnrads und derselben Abtriebswelle das Getriebe einfach zwischen der ersten Konfiguration und der dritten Konfiguration umgebaut werden kann.

Eine andere Ausführungsform schlägt vor, dass die Antriebsachse geometrisch mittig zwischen der Abtriebsachse und einer koaxial zur Zwischenwelle verlaufenden Zwischenachse angeordnet ist. Mit anderen Worten, die Abtriebsachse und die Zwischenachse, die parallel zueinander verlaufen, besitzen denselben Abstand von der Antriebsachse. Hierdurch ist ein Wechseln des ersten Übersetzungszahnrads von der Abtriebswelle auf die Zwischenwelle möglich, so dass in beiden Fällen das an dem ersten Übersetzungszahnrad ausgebildete Schneckenrad mit der Schnecke in Eingriff gebracht werden kann,

Vorteilhaft kann nun eine Drehmomentkopplung zum Aktivieren und Deaktivieren einer Drehmomentübertragung zwischen dem ersten Übersetzungszahnrad und der Abtriebswelle vorgesehen sein. Mit anderen Worten, die Drehmomentkopplung ist zwischen einem aktivierten Zustand, in dem das erste Übersetzungszahnrad drehfest an der Abtriebswelle angeordnet ist, und einem deaktivierten Zustand umgeschaltet werden, in dem das erste Übersetzungszahnrad an der Abtriebswelle drehbar angeordnet ist.

Eine andere Ausführungsform schlägt vor, dass die Abtriebswelle eine quer zur Abtriebsachse verlaufende Durchgangsöffnung aufweist, in die ein Mitnehmerstift einsetzbar ist, derart, dass er an diametral gegenüberliegenden Seiten jeweils über die Abtriebswelle übersteht. In der ersten Konfiguration ist besagter Mitnehmerstift in die Durchgangsöffnung eingesetzt und steht mit einer am ersten Übersetzungszahnrad ausgesparten, dazu komplementären Mitnehmeraufnahme in Eingriff. Die Mitnehmeraufnahme ist dabei axial offen, so dass sich das erste Übersetzungszahnrad axial auf die Abtriebswelle aufsetzen lässt bis der Mitnehmerstift mit der Mitnehmeraufnahme in Eingriff steht. Der mit der Mitnehmeraufnahme in Eingriff stehende Mitnehmerstift bewirkt eine drehmomentübertragende Kopplung zwischen Abtriebswelle und erstem Übersetzungszahnrad. Alternativ sind auch andere Maßnahmen zur drehfesten Kopplung zwischen Abtriebswelle und erstem Übersetzungszahnrad möglich, wie z.B. eine Klebverbindung oder die Verwendung einer Passfeder.

Gemäß einer Weiterbildung kann dieser Mitnehmerstift für die dritte Konfiguration weggelassen werden. In der Folge fehlt der formschlüssige Eingriff zwischen Abtriebswelle und erstem Übersetzungszahnrad, so dass das erste Übersetzungszahnrad auf der Abtriebswelle drehbar angeordnet ist. In der zweiten Konfiguration wird der Mitnehmerstift zwar nicht benötigt, stört jedoch auch nicht, so dass er grundsätzlich in die Durchgangsöffnung eingesetzt sein kann.

Zweckmäßig bilden diese Durchgangsöffnung, dieser Mitnehmerstift und diese Mitnehmeraufnahme Bestandteile der vorstehend genannten Drehmomentkopplung. Diese ist in den aktivierten Zustand geschaltet bzw. verstellt, wenn der Mitnehmerstift die Durchgangsöffnung durchsetzt und in die Mitnehmeraufnahme eingreift. Wird dagegen der Mitnehmerstift weggelassen, ist die Drehmomentkopplung in den deaktivierten Zustand geschaltet bzw. verstellt.

Besonders zweckmäßig ist eine Ausführungsform, bei der die Antriebswelle oder die Schnecke in einem vom Elektromotor axial abgewandten bzw. entfernten Endbereich der Antriebswelle bzw. der Schnecke radial an einem Gehäuse der Stelleinrichtung einseitig oder zweiseitig abgestützt bzw. gelagert ist. Hierdurch lassen sich die Reaktionskräfte zwischen Schnecke und Schneckenrad aufnehmen. In diesem Zusammenhang bezieht sich "axial" auf die Rotationsachse des Elektromotors.

Ein erfindungsgemäßes Baukastensystem, mit dessen Hilfe eine Stelleinrichtung der vorstehend beschriebenen Art hergestellt werden kann, umfasst einen Elektromotor, der einen Stator und einen Rotor mit einer Antriebswelle aufweist, wobei die Antriebswelle drehfest eine Schnecke trägt. Das Baukastensystem umfasst in einer Grundausstattung ferner eine Abtriebswelle, ein Abtriebszahnrad, ein erstes Übersetzungszahnrad, eine Zwischenwelle und ein Gehäuse, das eine Lagerstelle für die Abtriebswelle, einen Steckplatz oder eine Lagerstelle für die Zwischenwelle und eine Motoraufnahme für den Elektromotor aufweist. Mit Hilfe des Baukastensystems lassen sich in dieser Grundausstattung die erste Konfiguration und die zweite Konfiguration für das Getriebe realisieren, so dass mit Hilfe des Baukastensystems zwei verschiedene Stelleinrichtungen hergestellt werden können.

Gemäß einer vorteilhaften Ausführungsform bzw. in einer erweiterten Ausstattung kann das Baukastensystem außerdem ein zweites Übersetzungszahnrad aufweisen. In dieser erweiterten Ausstattung ist es mit Hilfe des Baukastensystems außerdem möglich, die dritte Konfiguration für das Getriebe zu realisieren, so dass mit Hilfe des Baukastensystems letztlich drei verschiedene Stelleinrichtungen hergestellt werden können.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch,
- Fig. 1: eine isometrische Ansicht einer Stelleinrichtung bei geöffnetem Gehäuse,
- Fig. 2: eine auseinandergezogene, isometrische Ansicht der Stelleinrichtung aus Fig. 1,
- Fig. 3: eine Axialansicht der Stelleinrichtung bei weggelassenem Gehäuse in einer ersten Konfiguration eines Getriebes der Stelleinrichtung,
- Fig. 4: eine Axialansicht wie in Fig. 1, jedoch bei einer anderen Ausführungsform der ersten Konfiguration des Getriebes,
- Fig. 5: eine Axialansicht wie in den Fig. 3 und 4, jedoch bei einer zweiten Konfiguration des Getriebes,
- Fig. 6: eine Axialansicht wie in den Fig. 3 bis 5, jedoch in einer dritten Konfiguration des Getriebes,
- Fig. 7: eine isometrische Ansicht einer Abtriebswelle der Stelleinrichtung,
- Fig. 8: eine isometrische Ansicht eines ersten Übersetzungszahnrads des Getriebes.

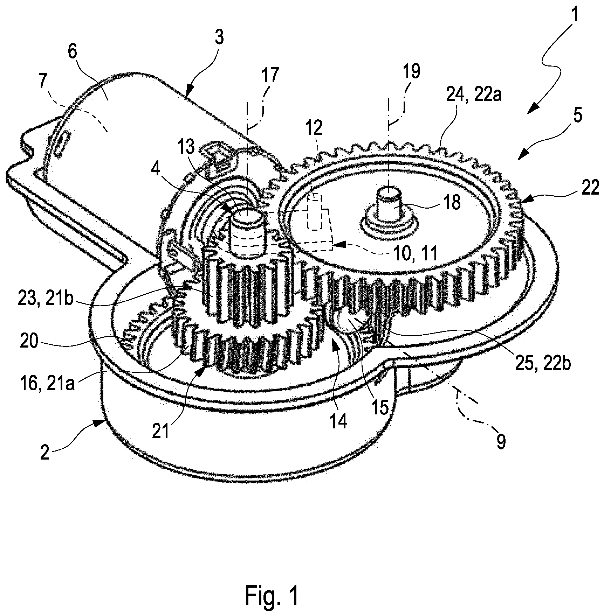

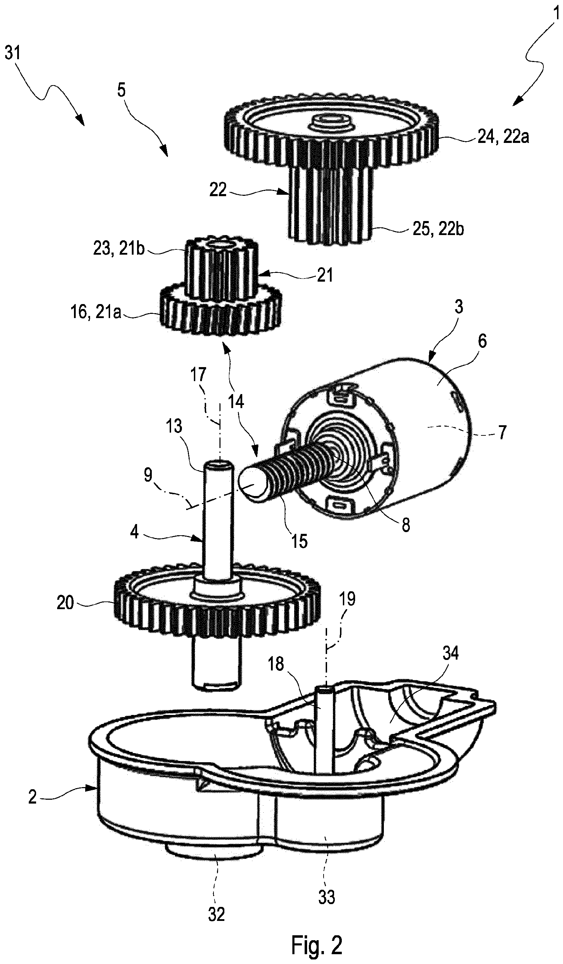

Entsprechend den Fig. 1 und 2 umfasst eine Stelleinrichtung 1, mit deren Hilfe ein hier nicht näher gezeigtes Bauteil mechanisch betätigt werden kann, ein nur teilweise gezeigtes Gehäuses 2, einen Elektromotor 3, eine Abtriebswelle 4 und ein Getriebe 5. Die Stelleinrichtung 1 kann beispielsweise bei einer Brennkraftmaschine, insbesondere in einem Kraftfahrzeug, zum Betätigen einer Klappe oder eines Ventils in einer Frischluftanlage oder in einer Abgasanlage dienen. Insbesondere kann die Stelleinrichtung an einem Abgasturbolader angeordnet sein, beispielsweise um ein Wastegate-Ventil oder um eine variable Turbinengeometrie zu betätigen. Bevorzugt kommt die Stelleinrichtung 1 bei elektrisch betätigten Klappen zum Einsatz, wie z.B. bei Thermostaten, Abgasklappe, Akustikklappen und Bypassklappen.

Der Elektromotor 3 weist in üblicher Weise einen außenliegenden Stator 6 und einen innenliegenden Rotor 7 mit einer Antriebswelle 8 auf, die axial aus dem Elektromotor 3 herausgeführt ist. Die Antriebswelle 8 kann dabei um eine Antriebsachse 9 rotieren. Die Abtriebswelle 4 dient zur drehenden, direkten oder indirekten Kopplung mit dem zu betätigenden Bauteil. Dies kann durch eine unmittelbare Kopplung der Abtriebswelle 4 mit besagtem Bauteil oder durch eine mittelbare Kopplung der Abtriebswelle 4 mit besagtem Bauteil erfolgen. Bei einer unmittelbaren oder direkten Kopplung ist die Abtriebswelle 4 selbst direkt mit dem zu betätigenden Bauteil drehfest verbunden. Für eine mittelbare oder indirekte Kopplung kann die Abtriebswelle 4 zum drehenden Antreiben eines in Fig. 1 mit unterbrochener Linie angedeuteten Stellglieds 10 vorgesehen sein, zum Beispiel in Form eines Hebelarms 11, der drehfest mit der Abtriebswelle 4 verbunden ist und der im Beispiel beabstandet zur Abtriebswelle 4 einen Zapfen 12 zur mechanischen Kopplung mit dem jeweiligen zu betätigenden Bauteil trägt. Das Stellglied 10 ist dann zweckmäßig an einem aus dem Gehäuse 2 herausgeführten Längsende 13 der Abtriebswelle 4 drehfest angebracht.

Das Getriebe 5 verbindet die Antriebswelle 8 antriebsmäßig mit der Abtriebswelle 4 und umfasst hierzu einen Schneckentrieb 14. Dieser Schneckentrieb 14 ist dabei mit Hilfe einer Schnecke 15 und eines Schneckenrads 16 gebildet, das passend zur Schnecke 15 ausgestaltet ist. Die Abtriebswelle 4 ist dabei um eine Abtriebsachse 17 drehbar, die senkrecht zur Antriebsachse 9 verläuft. Zum Abstützen der Reaktionskräfte aus dem Eingriff zwischen Schnecke 15 und Schneckenrad 16 kann die Antriebswelle 8 oder kann die Schnecke 15 in einem vom Elektromotor 3 axial beabstandeten oder abgewandten oder entfernten Endbereich radial am Gehäuse 2 der Stelleinrichtung 1 abgestützt bzw. gelagert sein, was hier nicht dargestellt ist.

Außerdem ist die Stelleinrichtung 1 mit einer Zwischenwelle 18 ausgestattet, deren Längsmittelachse eine Zwischenachse 19 definiert, die sich parallel zur Abtriebsachse 17 erstreckt und dementsprechend ebenfalls senkrecht zur Antriebsachse 9 verläuft. Diese Zwischenwelle 18 kann im Gehäuse 2 um die Zwischenachse 19 drehbar gelagert sein. Bevorzugt ist jedoch eine Ausführungsform, bei der die Zwischenwelle 18 im Gehäuse 2 feststehend angeordnet ist.

Das Getriebe 5 umfasst ferner ein Abtriebszahnrad 20, ein erstes Übersetzungszahnrad 21 und ein zweites Übersetzungszahnrad 22. Das erste Übersetzungszahnrad 21 umfasst zwei daran integral ausgeformte Zahnradabschnitte 21a und 21b, die verschiedene Durchmesser und verschiedene Zähnezahlen aufweisen. Der eine Zahnradabschnitt 21a bildet dabei das Schneckenrad 16, während der andere Zahnradabschnitt 21b ein erstes Zahnrad 23 bildet. Auch das zweite Übersetzungszahnrad 22 weist zwei integral daran ausgeformte Zahnradabschnitte 22a und 22b auf, die sich durch verschiedene Durchmesser und verschiedene Zähnezahlen voneinander unterscheiden. Der eine Zahnradabschnitt 22a bildet ein zweites Zahnrad 24, während der andere Zahnradabschnitt 22b ein drittes Zahnrad 25 bildet.

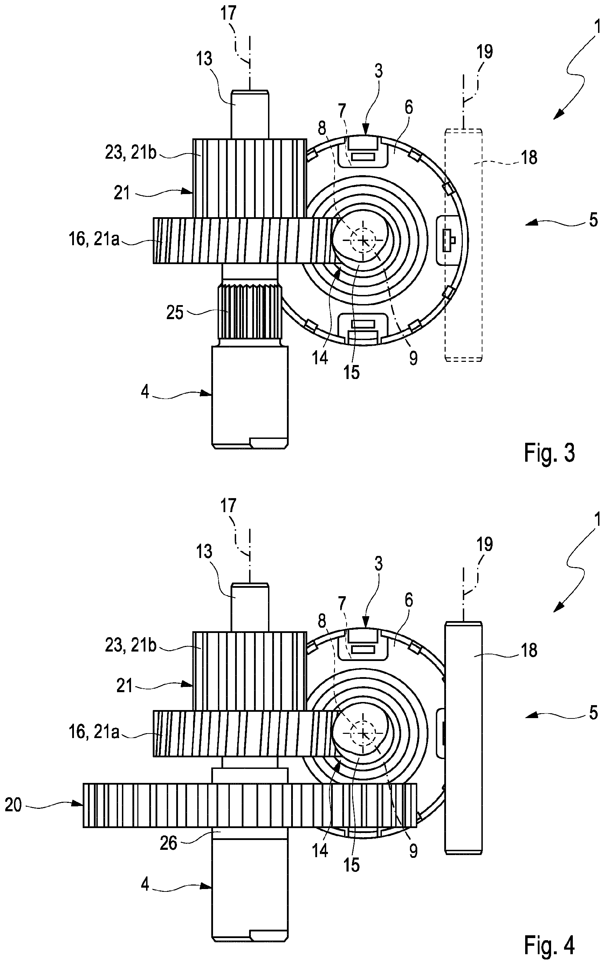

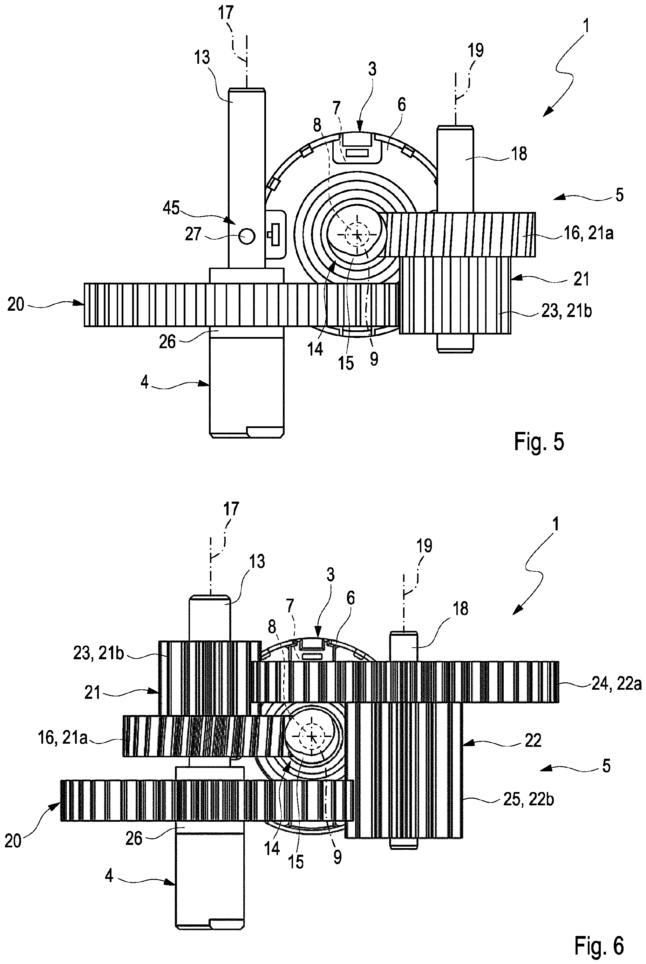

Bei der hier vorgestellten Stelleinrichtung 1 lässt sich das Getriebe 5 wenigstens zwischen zwei verschiedenen, vorzugsweise zwischen drei verschiedenen Konfigurationen umbauen. Nachfolgend werden anhand der Fig. 3 und 4 eine einstufige erste Konfiguration, anhand der Fig. 5 eine zweistufige zweite Konfiguration und anhand von Fig. 6 eine dreistufige dritte Konfiguration näher erläutert. Die dreistufige Konfiguration gemäß Fig. 6 ist auch in Fig. 1 dargestellt.

Gemäß den Fig. 3 und 4 ist in der ersten Konfiguration das erste Übersetzungszahnrad 21 drehfest auf der Abtriebswelle 4 angeordnet, und zwar derart, dass die Schnecke 15 mit dem Schneckenrad 16 in Eingriff steht. Im Unterschied dazu steht das erste Zahnrad 23 frei. In der ersten Konfiguration ist das erste Zahnrad 23 funktionslos. In dieser ersten Konfiguration ist das Getriebe 5 einstufig, so dass die Kraftübertragung bzw. Drehmomentübertragung von der Antriebswelle 8 über die Schnecke 15 auf das Schneckenrad 16 und vom ersten Übersetzungszahnrad 21 auf die Abtriebswelle 4 erfolgt. Die übrigen Komponenten des Getriebes 5, nämlich das Abtriebszahnrad 20 und das zweite Übersetzungszahnrad 22 sowie die Zwischenwelle 18 werden in dieser ersten Konfiguration nicht benötigt. Dennoch können Teile dieser weiteren Komponenten des Getriebes 5 auch bei der ersten Konfiguration vorhanden sein, jedoch funktionslos. So ist rein exemplarisch in Fig. 3 mit unterbrochener Linie die Zwischenwelle 18 angedeutet. In Fig. 4 sind rein exemplarisch die Zwischenwelle 18 und das Abtriebszahnrad 20 dargestellt, die in dieser ersten Konfiguration beide funktionslos sind. In Fig. 3 ist auf der Abtriebswelle 4 ein Längsabschnitt mit einer Axialverzahnung 25 erkennbar, die zur drehfesten Kopplung mit dem Abtriebszahnrad 20 dient. Das Abtriebszahnrad 20 weist in seiner Nabe 26 eine dazu komplementäre axiale Innenverzahnung auf, die mit der Axialverzahnung 25 zur Drehmomentübertragung in Eingriff steht, wenn das Abtriebszahnrad 20 auf die Abtriebswelle 4 aufgesteckt ist. Alternativ kann das Abtriebszahnrad 20 auf die Axialverzahnung 25 aufgepresst sein, so dass sich das Abtriebszahnrad 20 im Bereich der Nabe 26 plastisch verformt, um eine formschlüssige drehfeste Verbindung zwischen Abtribswell4 und Abtriebszahnrad 20 zu erzeugen. Ebenso ist grundsätzlich denkbar, dass das Abtriebszahnrad 20 im Bereich der Axialverzahnung 25 oder einer anderen, einen Formschluss ermöglichenden Kontur an die Abtriebswelle 4 angespritzt ist.

In der in Fig. 5 gezeigten zweiten Konfiguration des Getriebes 5 ist das erste Übersetzungszahnrad 21 drehbar auf die Zwischenwelle 18 aufgesetzt, derart, dass die Schnecke 15 wiederum mit dem Schneckenrad 16 in Eingriff steht. In diesem Fall steht das erste Zahnrad 23 mit dem Abtriebszahnrad 20 in Eingriff, das wie vorstehend genannt drehfest auf der Abtriebswelle 4 angeordnet ist. Auf diese Weise wird eine zweistufige Übersetzung realisiert. Der Kraft- bzw. Drehmomentpfad läuft somit von der Antriebswelle 8 über die Schnecke 15 auf das Schneckenrad 16, vom Schneckenrad 16 über das erste Übersetzungszahnrad 21 auf das erste Zahnrad 23 und von diesem über das Abtriebszahnrad 20 auf die Abtriebswelle 4. In dieser zweiten Konfiguration wird das zweite Übersetzungszahnrad 22 nicht benötigt.

Gemäß Fig. 6 kommt nun in der dritten Konfiguration des Getriebes 5 auch das zweite Übersetzungszahnrad 22 zum Einsatz. In dieser dritten Konfiguration des Getriebes 5 ist das erste Übersetzungszahnrad 21 wie in der ersten Konfiguration auf der Abtriebswelle 4 angeordnet, in diesem Fall jedoch drehbar. Die Positionierung des ersten Übersetzungszahnrads 21 auf der Abtriebswelle 4 erfolgt dabei wieder so, dass die Schnecke 15 wieder mit dem Schneckenrad 16 in Eingriff steht. Das zweite Übersetzungszahnrad 22 ist drehbar auf die Zwischenwelle 18 aufgesteckt, derart, dass das erste Zahnrad 23 mit dem zweiten Zahnrad 24 in Eingriff steht. Außerdem steht das dritte Zahnrad 25 mit dem Abtriebszahnrad 20 in Eingriff, das wiederum drehfest mit der Abtriebswelle 4 verbunden ist. Insoweit wird auf sehr kompaktem Raum eine dreistufige Übersetzung realisiert. Der Kraft- bzw. Drehmomentpfad führt somit von der Antriebswelle 8 über die Schnecke 5 und über das Schneckenrad 15 auf das erste Übersetzungszahnrad 21 und vom ersten Zahnrad 23 über das zweite Zahnrad 24 in das zweite Übersetzungszahnrad 22. Vom dritten Zahnrad 25 führt der Pfad über das Abtriebszahnrad 20 in die Abtriebswelle 4.

Beim hier vorgestellten Beispiel der Stelleinrichtung 1 bzw. des Getriebes 5 sind das erste Zahnrad 23 und das dritte Zahnrad 25 hinsichtlich Durchmesser und Zähnezahl identisch. Sie unterscheiden sich lediglich durch unterschiedliche axiale Höhen. Ferner ist hier vorgesehen, dass das zweite Zahnrad 24 und das Abtriebszahnrad 20 hinsichtlich Durchmesser und Zähnezahl identisch sind. Im Beispiel besitzen sie außerdem die gleiche axiale Höhe.

Beim hier gezeigten Beispiel besitzen das erste Zahnrad 23 und das dritte Zahnrad 25 den gleichen Durchmesser und die gleiche Zähnezahl. Insoweit besitzen das erste Zahnrad 23 und das dritte Zahnrad 25 den gleichen Modul. Ebenso besitzen das zweite Zahnrad 24 und das Abtriebszahnrad 20 den gleichen Durchmesser und die gleiche Zähnezahl. Insoweit besitzen das zweite Zahnrad 24 und das Abtriebszahnrad 20 den gleichen Modul. Zweckmäßig ist vorgesehen, dass das erste Zahnrad 23, das zweite Zahnrad 24, das dritte Zahnrad 25 und das Abtriebszahnrad 20 den gleichen Modul aufweisen.

In der dritten Konfiguration gemäß Fig. 6 ist die Schnecke 15 bzw. die Antriebswelle 8 bzw. die Antriebsachse 9 geometrisch zwischen dem Abtriebszahnrad 20 und dem zweiten Zahnrad 24 angeordnet. Außerdem ist die Schnecke 15 geometrisch zwischen dem ersten Übersetzungszahnrad 21 und dem zweiten Übersetzungszahnrad 22 angeordnet.

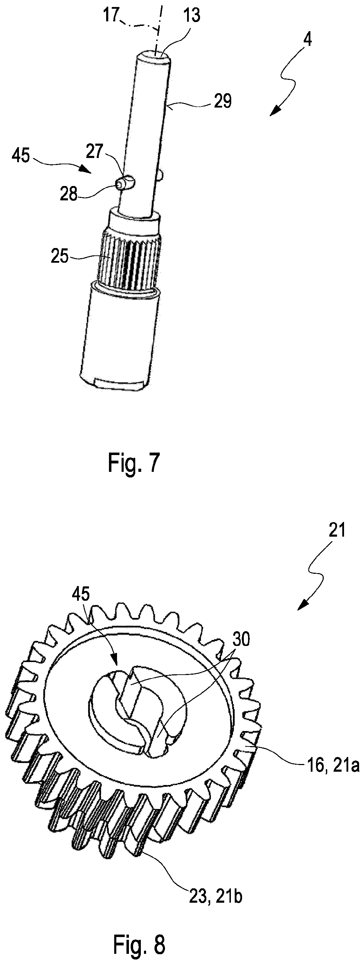

Unabhängig von der jeweiligen Konfiguration ist die Antriebsachse 9 geometrisch mittig zwischen der Abtriebsachse 17 und der Zwischenachse 19 positioniert. Um nun das erste Übersetzungszahnrad 21 für die erste Konfiguration drehfest mit der Abtriebswelle 4 verbinden zu können und für die dritte Konfiguration drehbar an der Abtriebswelle 4 anordnen zu können, kann gemäß Fig. 7 an der Abtriebswelle 4 eine aktivierbare und deaktivierbare Drehmomentkopplung 45 vorgesehen sein. Im hier gezeigten Beispiel ist diese Drehmomentkopplung 45 mit Hilfe einer Durchgangsöffnung 27 gebildet, die an der Abtriebswelle 4 ausgebildet ist und die sich quer zur Abtriebsachse 17 erstreckt. Für die erste Konfiguration, also für die drehfeste Kopplung mit dem ersten Übersetzungszahnrad 21 weist die Drehmomentkopplung 45 außerdem einen Mitnehmerstift 28 auf, der zum Aktivieren und Deaktivieren der Drehmomentkopplung 45 dient. Zum Aktivieren der Drehmomentkopplung 45 ist der Mitnehmerstift 28 so in die Durchgangsöffnung 28 eingesetzt, dass er diese durchsetzt und mit seinen Längsenden an diametral gegenüberliegenden Seiten radial über eine Außenkontur 29 der Abtriebswelle 4 vorsteht.

Das erste Übersetzungszahnrad 21 kann nun gemäß Fig. 8 an einem dem Betrachter zugewandten axialen Ende eine axial offene Mitnehmeraufnahme 30 aufweisen, die komplementär zum Mitnehmerstift 28 geformt ist und einen weiteren Bestandteil der Drehmomentkopplung 45 bildet. Diese Mitnehmeraufnahme 30 befindet sich dabei im Bereich des Schneckenrads 16 bzw. im Bereich des Zahnradabschnitts 21a, der beim Aufstecken des ersten Übersetzungszahnrads 21 auf die Abtriebswelle 4 vorausgeht.

Für die erste Konfiguration wird somit mit Hilfe des Mitnehmerstifts 28 die Drehmomentkopplung 45 aktiviert, um eine formschlüssige Kopplung zur Drehmomentübertragung bzw. zur drehfesten Fixierung des ersten Übersetzungszahnrads 21 an der Abtriebswelle 4 zu realisieren. Um nun für die dritte Konfiguration eine Verdrehbarkeit des zweiten Übersetzungszahnrads 21 auf der Abtriebswelle 4 zu ermöglichen, kann der Mitnehmerstift 28 weggelassen werden, so dass es bei auf die Abtriebswelle 4 aufgestecktem ersten Übersetzungszahnrad 21 zu keiner formschlüssigen Kopplung zwischen erstem Übersetzungszahnrad 21 und Abtriebswelle 4 kommt. Insoweit kann durch Weglassen bzw. Entfernen des Mitnehmerstifts 28 die Drehmomentkopplung 45 deaktiviert werden. In Fig. 5 ist die Durchgangsöffnung 27 bei fehlendem Mitnehmerstift 28 gezeigt.

In Fig. 2 ist außerdem ein Baukastensystem 31 erkennbar, mit dessen Hilfe die vorstehend beschriebene Stelleinrichtung 1 herstellbar ist. Dieses Baukastensystem 31 umfasst den Elektromotor 3, die Abtriebswelle 4, das Abtriebszahnrad 20, das erste Übersetzungszahnrad 21, die Zwischenwelle 18 und das Gehäuse 2. Das Gehäuse 2 weist dabei eine zur drehbaren Lagerung der Abtriebswelle 4 geeignete Lagerstelle 32 sowie einen zur Aufnahme der Abtriebswelle 18 geeigneten Steckplatz 33 auf. Ferner enthält das Gehäuse 2 eine Motoraufnahme 34 zur Unterbringung des Elektromotors 3 im Gehäuse 2. Mit diesem Baukastensystem 31 lässt sich die erste Konfiguration gemäß den Fig. 3 und 4 sowie die zweite Konfiguration gemäß Fig. 5 realisieren. Wenn das Baukastensystem 31 außerdem mit dem zweiten Übersetzungszahnrad 22 ausgestattet ist, lässt sich darüber hinaus außerdem die dritte Konfiguration gemäß Fig. 6 realisieren.

## Patentansprüche

1. Stelleinrichtung zum mechanischen Betätigen eines Bauteils,
- mit einem Elektromotor (3), der einen Stator (6) und einen Rotor (7) mit Antriebswelle (8) aufweist,
- mit einer Abtriebswelle (4) zum direkten oder indirekten Betätigen des Bauteils, und
- mit einem Getriebe (5), das die Antriebswelle (8) mit der Abtriebswelle (4) antriebsmäßig verbindet und das einen Schneckentrieb (14) mit Schnecke (15) und Schneckenrad (16) aufweist,
- wobei eine Antriebsachse (9), um welche die Antriebswelle (8) drehbar ist, senkrecht zu einer Abtriebsachse (17) verläuft, um welche die Abtriebswelle (4) drehbar ist,
- wobei die Schnecke (15) drehfest bezüglich der Antriebswelle (8) angeordnet ist,
- wobei das Schneckenrad (16) und ein erstes Zahnrad (23) durch ein erstes Übersetzungszahnrad (21) gebildet sind, an dem zwei Zahnradabschnitte (21a, 21b) integral ausgeformt oder drehfest zueinander miteinander verbunden sind, die verschiedene Durchmesser und/oder Zähnezahlen aufweisen und die das Schneckenrad (16) und das erste Zahnrad (23) bilden,
**dadurch gekennzeichnet,**
- **dass** das Getriebe (5) zwischen einer einstufigen ersten Konfiguration und einer zweistufigen zweiten Konfiguration umgebaut ist,
- **dass** in der ersten Konfiguration das erste Übersetzungszahnrad (21) drehfest auf der Abtriebswelle (4) angeordnet ist, so dass die Schnecke (15) mit dem Schneckenrad (16) in Eingriff steht und das erste Zahnrad (23) freisteht, und
- **dass** in der zweiten Konfiguration das erste Übersetzungszahnrad (21) drehbar auf einer Zwischenwelle (18) angeordnet ist, die sich parallel zur Abtriebswelle (4) erstreckt, so dass die Schnecke (15) mit dem Schneckenrad (16) in Eingriff steht, während das erste Zahnrad (23) mit einem Abtriebszahnrad (20) in Eingriff steht, das drehfest auf der Abtriebswelle (4) angeordnet ist.

2. Stelleinrichtung nach Anspruch 1,
**dadurch gekennzeichnet,**
**dass** die Antriebswelle (8) und die Abtriebswelle (4) in der ersten Konfiguration und in der zweiten Konfiguration dieselbe Relativlage zueinander aufweisen.

3. Stelleinrichtung nach Anspruch 1 oder 2,
**dadurch gekennzeichnet,**
- **dass** das Getriebe (5) zwischen der einstufigen ersten Konfiguration, der zweistufigen zweiten Konfiguration und einer dreistufigen dritten Konfiguration umgebaut ist,
- **dass** in der dritten Konfiguration das erste Übersetzungszahnrad (21) drehbar auf der Abtriebswelle (4) angeordnet ist und ein zweites Übersetzungszahnrad (22) drehbar auf der Zwischenwelle (18) angeordnet ist,
- **dass** am zweiten Übersetzungszahnrad (22) zwei Zahnradabschnitte (22a, 22b) integral ausgeformt sind, die verschiedene Durchmesser und/oder Zähnezahlen aufweisen und ein zweites Zahnrad (24) und ein drittes Zahnrad (25) bilden, und
- **dass** in der dritten Konfiguration das erste Zahnrad (23) mit dem zweiten Zahnrad (24) in Eingriff steht, während das dritte Zahnrad (25) mit dem Abtriebszahnrad (20) in Eingriff steht, das drehfest auf der Abtriebswelle (4) angeordnet ist.

4. Stelleinrichtung nach Anspruch 3,
**dadurch gekennzeichnet,**
- **dass** die Antriebswelle (8) und die Abtriebswelle (4) in der ersten Konfiguration, in der zweiten Konfiguration und in der dritten Konfiguration dieselbe Relativlage zueinander aufweisen,
- **dass** die Zwischenwelle (18) in der zweiten Konfiguration und in der dritten Konfiguration dieselbe Relativlage zur Antriebswelle (8) und zur Abtriebswelle (4) aufweist.

5. Stelleinrichtung nach Anspruch 3 oder 4,
**dadurch gekennzeichnet,**
- **dass** das erste Zahnrad (23) und das dritte Zahnrad (25) gleiche Moduln aufweisen, und/oder
- **dass** das erste Zahnrad (23) und das dritte Zahnrad (25) hinsichtlich der Zähnezahl identisch sind.

6. Stelleinrichtung nach einem der Ansprüche 3 bis 5,
**dadurch gekennzeichnet,**
- **dass** das zweite Zahnrad (24) und das Abtriebszahnrad (20) gleiche Moduln aufweisen, und/oder
- **dass** das zweite Zahnrad (24) und das Abtriebszahnrad (20) hinsichtlich der Zähnezahl identisch sind.

7. Stelleinrichtung nach einem der Ansprüche 3 bis 6,
**dadurch gekennzeichnet,**
**dass** das erste Zahnrad (23), das zweite Zahnrad (24), das dritte Zahnrad (25) und das Abtriebszahnrad (20) den gleichen Modul aufweisen.

8. Stelleinrichtung nach einem der Ansprüche 3 bis 7,
**dadurch gekennzeichnet,**
- **dass** in der dritten Konfiguration die Schnecke (15) geometrisch zwischen dem Abtriebszahnrad (20) und dem zweiten Zahnrad (24) angeordnet ist, und/oder
- **dass** in der dritten Konfiguration die Schnecke (15) parallel zur Abtriebsachse (17) gesehen geometrisch zwischen dem zweiten Zahnrad (24) und dem Abtriebszahnrad (20) angeordnet ist und quer zur Abtriebsachse (17) gesehen geometrisch zwischen der Abtriebswelle (4) und der Zwischenwelle (18) angeordnet ist.

9. Stelleinrichtung nach einem der Ansprüche 3 bis 8,
**dadurch gekennzeichnet,**
**dass** das erste Übersetzungszahnrad (21) für die erste Konfiguration drehfest und für die dritte Konfiguration drehbar an der Abtriebswelle (4) angebracht ist.

10. Stelleinrichtung nach einem der Ansprüche 1 bis 9,
**dadurch gekennzeichnet,**
- **dass** die Antriebsachse (9) geometrisch mittig zwischen der Abtriebsachse (17) und einer koaxial zur Zwischenwelle (18) verlaufenden Zwischenachse (19) angeordnet ist, und/oder
- **dass** eine Drehmomentkopplung (45) zum Aktivieren und Deaktivieren einer Drehmomentübertragung zwischen dem ersten Übersetzungszahnrad (21) und der Abtriebswelle (4) vorgesehen ist.

11. Stelleinrichtung nach einem der Ansprüche 1 bis 10,
**dadurch gekennzeichnet,**
- **dass** die Abtriebswelle (4) eine quer zur Abtriebsachse (17) verlaufende Durchgangsöffnung (27) aufweist, und
- **dass** in der ersten Konfiguration ein Mitnehmerstift (28) die Durchgangsöffnung (27) durchsetzt und mit einer am ersten Übersetzungszahnrad (21) ausgesparten Mitnehmeraufnahme (30) in Eingriff steht.

12. Stelleinrichtung nach den Ansprüchen 3 und 11,
**dadurch gekennzeichnet,**
**dass** in der dritten Konfiguration der Mitnehmerstift (28) fehlt oder nicht mit der Mitnehmeraufnahme (30) in Eingriff steht.

13. Stelleinrichtung nach einem der Ansprüche 1 bis 12,
**dadurch gekennzeichnet,**
**dass** die Antriebswelle (8) oder die Schnecke (15) in einem vom Elektromotor (3) abgewandten Endbereich radial an einem Gehäuse (2) der Stelleinrichtung (1) abgestützt ist.

14. Baukastensystem zum Herstellen einer Stelleinrichtung (1) nach einem der Ansprüche 1 bis 13,
- mit dem Elektromotor (3),
- mit der Abtriebswelle (4),
- mit dem Abtriebszahnrad (20),
- mit dem ersten Übersetzungszahnrad,
- mit der Zwischenwelle, und
- mit einem Gehäuse (2), das eine Lagerstelle (32) für die Abtriebswelle (4), einen Steckplatz (33) oder eine Lagerstelle für die Zwischenwelle (18) und eine Motoraufnahme (34) für den Elektromotor (3) aufweist.

15. Baukastensystem nach Anspruch 14,
**dadurch gekennzeichnet,**
**dass** außerdem das zweite Übersetzungszahnrad (22) vorgesehen ist.

## Claims

1. Control device for mechanically actuating a component,
- comprising an electric motor (3), which has a stator (6) and a rotor (7) with a drive shaft (8),
- comprising an output shaft (4) for directly or indirectly actuating the component, and
- comprising a transmission (5), which drivingly connects the drive shaft (8) to the output shaft (4) and which has a worm drive (14) with worm (15) and worm wheel (16),
- wherein a drive axis (9), about which the drive shaft (8) is rotatable, extends perpendicular to an output axis (17), about which the output shaft (4) is rotatable,
- wherein the worm (15) is arranged for conjoint rotation with respect to the drive shaft (8),
- wherein the worm wheel (16) and a first gear (23) are formed by a first transmission-gear (21), on which two gear sections (21a, 21b) are integrally formed or are connected together for conjoint rotation, which have different diameters and/or numbers of teeth and which form the worm wheel (16) and the first gear (23), **characterised in that**,
- the transmission (5) can be converted between a single-stage first configuration and a two-stage second configuration,
- that in the first configuration, the first transmission-gear (21) is arranged for conjoint rotation on the output shaft (4), so that the worm (15) meshes with the worm wheel (16) and the first gear (23) is free, and
- that in the second configuration, the first transmission-gear (21) is rotatably arranged on an intermediate shaft (18), which extends parallel to the output shaft (4), such that the worm (15) is meshed with the worm wheel (16), while the first gear (23) meshes with an output gear (20), which is arranged for conjoint rotation on the output shaft (4).

2. Control device according to claim 1, **characterised in that**
in the first configuration and in the second configuration, the drive shaft (8) and the output shaft (4) have the same relative position to one another.

3. Control device according to claim 1 or 2, **characterised in that**
- the transmission (5) can be converted between the single-stage first configuration, the two-stage second configuration and a three-stage third configuration,
- that in the third configuration, the first transmission-gear (21) is rotatably arranged on the output shaft (4) and a second transmission-gear (22) is rotatably arranged on the intermediate shaft (18),
- that two gear sections (22a, 22b) are integrally formed on the second transmission-gear (22), which have different diameters and/or numbers of teeth and form a second gear (24) and a third gear (25), and
- that in the third configuration, the first gear (23) meshes with the second gear (24), while the third gear (25) meshes with the output gear (20), which is arranged for conjoint rotation on the output shaft (4).

4. Control device according to claim 3, **characterised in that**
- in the first configuration, in the second configuration and in the third configurations, the drive shaft (8) and the output shaft (4) have the same relative position to one another,
- that in the second configuration and in the third configuration the intermediate shaft (18) has the same relative position with respect to the drive shaft (8) and to the output shaft (4).

5. Control device according to claim 3 or 4, **characterised in that**
- the first gear (23) and the third gear (25) have the same modules, and/or
- that the first gear (23) and the third gear (25) are identical with respect to the number of teeth.

6. Control device according to any one of claims 3 to 5, **characterised in that**
- the second gear (24) and the output gear (20) have the same modules,
and/or
- that the second gear (24) and the output gear (20) are identical with respect to the number of teeth.

7. Control device according to any one of claims 3 to 6, **characterised in that**
the first gear (23), the second gear (24), the third gear (25) and the output gear (20) have the same module.

8. Control device according to any one of claims 3 to 7, **characterised in that**
- in the third configuration, the worm (15) is geometrically arranged between the output gear (20) and the second gear (24), and/or
- that in the third configuration, the worm (15), viewed parallel to the output axis (17), is geometrically arranged between the second gear (24) and the output gear (20) and, viewed transverse to the output axis (17), is geometrically arranged between the output shaft (4) and the intermediate shaft (18).

9. Control device according to any one of claims 3 to 8, **characterised in that**
the first transmission-gear (21) is attached to the output shaft (4) for conjoint rotation in the first configuration and rotatably in the third configuration.

10. Control device according to any one of claims 1 to 9, **characterised in that**
- the drive shaft (9) is arranged geometrically centred between the drive axis (17) and an intermediate axis (19) running coaxial to the intermediate axis (18),
and/or
- that a torque coupling (45) is provided for activating and deactivating a torque transfer between the first transmission-gear (21) and the output shaft (4).

11. Control device according to any one of claims 1 to 10, **characterised in that**
- the output shaft (4) has a through-opening (27) running transverse to the output axis (17), and
- that in the first configuration, a carrier pin (28) passes through the through-opening (27) and meshes with a carrier receptacle (30) recessed on the first transmission-gear (21).

12. Control device according to claims 3 and 11, **characterised in that**
in the third configuration, the carrier pin (28) is missing or is not meshed with the carrier receptacle (30).

13. Control device according to any one of claims 1 to 12, **characterised in that**
the drive shaft (8) or the worm (15) is radially supported on a housing (2) of the control device (1) end region facing away from the electric motor (3).

14. Modular system for producing a control device (1) according to any one of claims 1 to 13,
- comprising the electric motor (3),
- comprising the output shaft (4),
- comprising the output gear (20),
- comprising the first transmission-gear,
- comprising the intermediate shaft, and
- comprising a housing (2), that has a bearing point (32) for the output shaft (4), a slot (33) or a bearing point for the intermediate shaft (18) and a motor receptacle (34) for the electric motor (3).

15. Modular system according to claim 14, **characterised in that** the second transmission-gear (22) is also provided.

## Revendications

1. Dispositif de réglage pour actionner de manière mécanique un composant,
- avec un moteur électrique (3), qui présente un stator (6) et un rotor (7) avec un arbre d'entraînement (8),
- avec un arbre de sortie (4) pour actionner de manière directe ou indirecte le composant, et
- avec une transmission (5), qui relie en entraînement l'arbre d'entraînement (8) à l'arbre de sortie (4) et qui présente un mécanisme à vis sans fin (14) avec une vis sans fin (15) et une roue hélicoïdale (16),
- dans lequel un axe d'entraînement (9), autour duquel l'arbre d'entraînement (8) peut être tourné, s'étend de manière perpendiculaire par rapport à un axe de sortie (17), autour duquel l'arbre de sortie (4) peut être tourné,
- dans lequel la vis sans fin (15) est disposée de manière solidaire en rotation par rapport à l'arbre d'entraînement (8),
- dans lequel la roue hélicoïdale (16) et une première roue dentée (23) sont formées par une première roue dentée de démultiplication (21), sur laquelle deux sections de roue dentée (21a, 21b) sont formées intégralement ou sont reliées entre elles de manière solidaire en rotation l'une par rapport à l'autre, qui présentent des diamètres et/ou des nombres de dents différents et qui forment la roue hélicoïdale (16) et la première roue dentée (23),
**caractérisé en ce**
- **que** la transmission (5) est modifiée entre une première configuration à une étape et une deuxième configuration à deux étapes,
- **que** dans la première configuration, la première roue dentée de démultiplication (21) est disposée de manière solidaire en rotation sur l'arbre de sortie (4) de sorte que la vis sans fin (15) est en prise avec la roue hélicoïdale (16) et la première roue dentée (23) est dégagée, et
- **que** dans la deuxième configuration, la première roue dentée de démultiplication (21) est disposée de manière à pouvoir tourner sur un arbre intermédiaire (18), qui s'étend de manière parallèle par rapport à l'arbre de sortie (4) de sorte que la vis sans fin (15) est en prise avec la roue hélicoïdale (16) tandis que la première roue dentée (23) est en prise avec une roue dentée de sortie (20) qui est disposée de manière solidaire en rotation sur l'arbre de sortie (4).

2. Dispositif de réglage selon la revendication 1,
**caractérisé en ce**
**que** l'arbre d'entraînement (8) et l'arbre de sortie (4) présentent, dans la première configuration et dans la deuxième configuration, la même position relative l'un par rapport à l'autre.

3. Dispositif de réglage selon la revendication 1 ou 2,
**caractérisé en ce**
- **que** la transmission (5) est modifiée entre la première configuration à une étape, la deuxième configuration à deux étapes et une troisième configuration à trois étapes,
- **que** dans la troisième configuration, la première roue dentée de démultiplication (21) est disposée de manière à pouvoir tourner sur l'arbre de sortie (4) et une deuxième roue dentée de démultiplication (22) est disposée de manière à pouvoir tourner sur l'arbre intermédiaire (18),
- **que** sont formées de manière intégrale sur la deuxième roue dentée de démultiplication (22) deux sections de roue dentée (22a, 22b), qui présentent des diamètres et/ou nombres de dents différents et forment une deuxième roue dentée (24) et une troisième roue dentée (25), et
- **que** dans la troisième configuration, la première roue dentée (23) est en prise avec la deuxième roue dentée (24), tandis que la troisième roue dentée (25) est en prise avec la roue dentée de sortie (20) qui est disposée de manière solidaire en rotation sur l'arbre de sortie (4).

4. Dispositif de réglage selon la revendication 3,
**caractérisé en ce**
- **que** l'arbre d'entraînement (8) et l'arbre de sortie (4) présentent, dans la première configuration, dans la deuxième configuration et dans la troisième configuration, la même position relative l'un par rapport à l'autre,
- **que** l'arbre intermédiaire (18) présente, dans la deuxième configuration et dans la troisième configuration, la même position relative par rapport à l'arbre d'entraînement (8) et par rapport à l'arbre de sortie (4).

5. Dispositif de réglage selon la revendication 3 ou 4,
**caractérisé en ce**
- **que** la première roue dentée (23) et la troisième roue dentée (25) présentent des modules identiques, et/ou
- **que** la première roue dentée (23) et la troisième roue dentée (25) sont identiques en termes de nombre de dents.

6. Dispositif de réglage selon l'une quelconque des revendications 3 à 5,
**caractérisé en ce**
- **que** la deuxième roue dentée (24) et la roue dentée de sortie (20) présentent des modules identiques, et/ou
- **que** la deuxième roue dentée (24) et la roue dentée de sortie (20) sont identiques en termes de nombre de dents.

7. Dispositif de réglage selon l'une quelconque des revendications 3 à 6,
**caractérisé en ce**
**que** la première roue dentée (23), la deuxième roue dentée (24), la troisième roue dentée (25) et la roue dentée de sortie (20) présentent le même module.

8. Dispositif de réglage selon l'une quelconque des revendications 3 à 7,
**caractérisé en ce**
- **que** dans la troisième configuration, la vis sans fin (15) est disposée de manière géométrique entre la roue dentée de sortie (20) et la deuxième roue dentée (24), et/ou
- **que** dans la troisième configuration, la vis sans fin (15) est disposée, vue de manière parallèle par rapport à l'axe de sortie (17), de manière géométrique entre la deuxième roue dentée (24) et la roue dentée de sortie (20) et est disposée, vue de manière transversale par rapport à l'axe de sortie (17), de manière géométrique entre l'arbre de sortie (4) et l'arbre intermédiaire (18).

9. Dispositif de réglage selon l'une quelconque des revendications 3 à 8,
**caractérisé en ce**
**que** la première roue dentée de démultiplication (21) est installée pour la première configuration de manière solidaire en rotation et pour la troisième configuration de manière à pouvoir tourner sur l'arbre de sortie (4).

10. Dispositif de réglage selon l'une quelconque des revendications 1 à 9,
**caractérisé en ce**
- **que** l'axe d'entraînement (9) est disposé au centre géométriquement entre l'axe de sortie (17) et un axe intermédiaire (19) s'étendant de manière coaxiale par rapport à l'arbre intermédiaire (18), et/ou
- **qu'**un couplage de couple de rotation (45) est prévu pour activer et désactiver une transmission de couple de rotation entre la première roue dentée de démultiplication (21) et l'arbre de sortie (4).

11. Dispositif de réglage selon l'une quelconque des revendications 1 à 10, **caractérisé en ce**
- **que** l'arbre de sortie (4) présente une ouverture de passage (27) s'étendant de manière transversale par rapport à l'axe de sortie (17), et
- **que** dans la première configuration, une tige d'entraîneur (28) traverse l'ouverture de passage (27) et est en prise avec un logement d'entraîneur (30) évidé sur la première roue dentée de démultiplication (21).

12. Dispositif de réglage selon les revendications 3 et 11,
**caractérisé en ce**
**que** dans la troisième configuration, la tige d'entraîneur (28) est manquante ou n'est pas en prise avec le logement d'entraîneur (30).

13. Dispositif de réglage selon l'une quelconque des revendications 1 à 12, **caractérisé en ce**
**que** l'arbre d'entraînement (8) ou la vis sans fin (15) est soutenu(e) radialement sur un boîtier (2) du dispositif de réglage (1) dans une zone d'extrémité opposée au moteur électrique (3).

14. Système modulaire pour fabriquer un dispositif de réglage (1) selon l'une quelconque des revendications 1 à 13,
- avec le moteur électrique (3),
- avec l'arbre de sortie (4),
- avec la roue dentée de sortie (20),
- avec la première roue dentée de démultiplication,
- avec l'arbre intermédiaire, et
- avec un boîtier (2), qui présente un point d'appui (32) pour l'arbre de sortie (4), un emplacement d'enfichage (33) ou un point d'appui pour l'arbre intermédiaire (18) et un logement de moteur (34) pour le moteur électrique (3).

15. Système modulaire selon la revendication 14,
**caractérisé en ce**
**qu'**est prévue par ailleurs la deuxième roue dentée de démultiplication (22).
